# EUROPÄISCHE PATENTSCHRIFT

(11) **EP 1 688 278 B1**
(45) Veröffentlichungstag und Bekanntmachung des Hinweises auf die Patenterteilung: **27.02.2008**
(21) Anmeldenummer: 06000763.0
(22) Anmeldetag: 14.01.2006
(51) Int. Cl.: B60D 5/00, B61D 17/22

(54) **Gewebelage eines Balges**
Fabric assembly for a communication passage
Tissus du soufflet d'un passage d'intercirculation

(30) Priorität: 08.02.2005 DE 102005005621
(43) Veröffentlichungstag der Anmeldung: 09.08.2006
(73) Patentinhaber: Hübner GmbH, 34123 Kassel (DE)
(72) Erfinder: Koch, Robert, 37242 Bad Sooden-Allendorf (DE)
(74) Vertreter: WALTHER, WALTHER & HINZ Patentanwälte - European Patent Attorneys

(56) Entgegenhaltungen:
- EP-A- 0 275 365
- EP-A- 0 544 203
- EP-A- 0 922 621
- DE-A1- 3 035 159
- DE-A1- 4 007 862
- DE-B3- 10 324 524

## Beschreibung

Die vorliegende Erfindung betrifft eine Gewebelage eines Balges, z. B. eines Übergangs zwischen zwei gelenkig miteinander verbundenen Fahrzeugen oder einer Fluggastbrücke, sowie einen Balg mit einer solchen Gewebelage.

Bälge insbesondere als Teil eines Übergangs zwischen zwei Fahrzeugteilen sind hinreichend bekannt. Diese können beispielsweise als Falten- oder auch als Wellenbälge ausgebildet sein. Sind sie als Faltenbälge ausgebildet, so sind die einzelnen Falten durch umlaufende Rahmen aus Aluminium eingefasst. Bei Wellenbälgen sind die einzelnen Balgelemente ebenfalls durch umlaufende Rahmen aus Aluminium eingefasst. Diese Rahmen dienen zum einen der Verbindung der einzelnen Falten- bzw. Wellenelemente, sorgen aber zum anderen schlussendlich auch dafür, dass der ganze Balg eine gewisse Steifigkeit erhält. Das heißt, es wird dafür gesorgt, dass der Balg über seine Länge auf Grund seines Eigengewichts nicht übermäßig durchhängt. Darüber hinaus sorgen diese Einfassrahmen auch dafür, dass der Balg nach Streckung immer wieder seine Ausgangslage einnimmt.

Aus der DE 30 35 159 A1 ist ein elastischer Verbindungsbalg zum Einbau zwischen zwei Fahrzeugteilen eines Gelenkfahrzeugs bekannt. Hierbei besteht der Verbindungsbalg aus einer vulkanisierbaren Elastomer-Gewebebahn" wobei eine solche Elastomer-Gewebebahn eine Gewebeeinlage umfasst, die von Elastomerschichten umgeben ist. Zur Formgebung wird diese Elastomer-Gewebebahn vor der Vulkanisation in eine Form gelegt, wobei die Fäden der Gewebeeinlage hierbei regellos S-förmig innerhalb, der Elastomerschicht von ihrer Achse abweichen.

Für die Herstellung eines solchen Balgmaterials werden vorzugsweise mehrere Gewebelagen miteinander verbunden, wobei die Verbindung durch Kunststoffschichten erfolgt, die bei mehreren Gewebelagen sowohl zwischen den einzelnen Gewebelagen als auch innen und außen vorgesehen sind. Diese mehreren Gewebelagen bewirken eine relative Steifigkeit des Balgmaterials als solches. Durch die Kunststoffbeschichtung erfolgt auch die Abdichtung des Materials. Die Herstellung solcher Balgmaterialien erfolgt üblicherweise auf Kalandern. Durch den doppel- oder mehrschichtigen Aufbau des Balgmaterials besitzt dieser Balg ein hohes Eigengewicht. Auf Grund dieses hohen Eigengewichts wiederum hat der Balg allerdings das Bestreben durchzuhängen. Das heißt, es müssen hier zwei widerstrebende Bedingungen zur Deckung gebracht werden, nämlich zum einen muss gewährleistet sein, dass das Balgmaterial als solches eine gewisse Steifigkeit aufweist, was nach dem Stand der Technik bedingt, dass das Material aus mindestens zwei oder mehr Gewebeschichten besteht, was allerdings zum anderen bedingt, dass das Balgmaterial schwerer wird und infolgedessen der Balg eine größere Neigung zum Durchhängen aufweist.

Gegenstand der Erfindung ist nun ein Balgmaterial für einen Balg der eingangs genannten Art, das einerseits leicht aber dennoch steif und darüber hinaus auch dicht ist.

Ein solches Balgmaterial zeichnet sich nach einer ersten Ausführungsform erfindungsgemäß dadurch aus, dass die Gewebelage durch Krafteinwirkung auf die Gewebelage vor der Kunststoffbeschichtung plastisch verformt ist.

Nach einer zweiten Ausführungsform ist erfindungsgemäß vorgesehen, die Gewebelage durch Krafteinwirkung auf die Gewebelage derart plastisch zu verformen, dass die zwischen Kett- und Schussfäden vorhandenen Öffnungen weitgehend geschlossen sind.

Ein übliches Gewebe für ein Balgmaterial ist in Kette und Schuss aufgebaut. Wie bereits an anderer Stelle erläutert, werden mindestens zwei solcher üblichen Gewebelagen verwandt, um ein solches Balgmaterial nach dem Stand der Technik bereitzustellen. Es hat sich allerdings herausgestellt, dass durch die plastische Verformung einer Gewebelage die Gewebelage als solche relativ steif wird. Dies ist damit begründbar, dass die Fäden durch die Verformung den zwischen den einzelnen Fäden befindlichen Raum ausfüllen und dadurch die Gewebelage insgesamt an Steifigkeit gewinnt. Hinzu tritt ein weiterer Vorteil, der darin besteht, dass auf Grund der Verformung der Gewebelage, beispielsweise durch Krafteinwirkung auf die Ober- und Unterseite, also durch Plätten einer solchen Gewebelage, durch die hiermit verbundene Verdichtung der Zwischenräume zwischen Kette und Schuss, eine solchermaßen behandelte Gewebelage bereits eine gewisse Grunddichtigkeit aufweist. Dies hat wiederum zur Folge, dass die Beschichtung mit Kunststoff zur Erzeugung der gewünschten Dichtigkeit mit geringeren Kunststoffmengen erfolgen kann, was eine Gewichtsersparnis zur Folge hat. Dies wiederum bedingt ein geringeres Gewicht des Balges, so dass dieser nicht so stark durchhängt.

Als Material für die Herstellung der Kett- und Schussfäden einer solchen zu verformenden Gewebelage kommen Kunststofffäden zum Einsatz, beispielsweise aus Polypropylen, Polyäthylen, Polyvinylchlorid, Polychlorid und ähnlichem. Voraussetzung für die Verwendung der Fäden ist allerdings, dass diese tatsächlich plastisch verformbar sind. Insbesondere hat sich herausgestellt, dass durch die Verwendung von monofilen Fäden, also Fäden, die nur aus einer Einzelfaser bestehen, gute Ergebnisse hinsichtlich der Steifigkeit einer erfindungsgemäß verformten Gewebelage erzielbar sind und darüber hinaus auch eine solche Gewebelage, die trotz geringer Kunststoffbeschichtungsdicke die an sie gestellten Anforderungen hinsichtlich der Dichtigkeit erfüllt.

Als Folge der erhöhten Steifigkeit bei geringerem Gewicht können Maßnahmen zum Stützen oder Stabilisieren des Balges entfallen; insbesondere hat sich herausgestellt, dass nicht mehr jede Falte oder Welle von einem umlaufenden Einfassrahmen, zum Beispiel aus Aluminium, erfasst werden muss, sondern beispielsweise nur noch jede zweite, dritte oder vierte Falte oder Welle. Dies spart weiterhin zusätzliches Gewicht und verhindert ein Durchhängen des Balges.

Nach einem weiteren Merkmal der Erfindung wird die Gewebelage einer Wärmebehandlung unterzogen, was bedeutet, dass die Fäden schrumpfen und auf diese Weise höhere Festigkeitswerte verwirklicht werden; gleichzeitig findet hierbei eine Verdichtung der Gewebelage statt mit der Folge, dass auch die Dichtigkeit erhöht wird. Denkbar ist hierbei, die Gewebelage zunächst einem solchen Hitzeschrumpf zu unterziehen, und danach in der oben beschriebenen Weise plastisch zu verformen, oder aber zunächst zu verformen, um dann die Gewebelage einem Hitzeschrumpf zu unterziehen.

Um die Fäden von außen gegen Umwelteinflüsse zu schützen, und auch um schlussendlich eine dauerhafte Dichtigkeit zu gewährleisten, ist nach einem weiteren Merkmal der Erfindung vorgesehen, dass die Gewebelage zumindest auf ihrer einen Seite, und zwar vorzugsweise auf der Außenseite mit einer Kunststoffschicht versehen ist.

Zusammenfassend sind demzufolge in Bezug auf das erfindungsgemäße Gewebe oder die Gewebelage folgende Vorteile festzuhalten:
1. Bereits eine erfindungsgemäß hergestellte einlagige Gewebelage weist eine ausreichende Steifigkeit und auch Dichtigkeit auf, so dass gegenüber einem herkömmlichen Balgmaterial eine erhebliche Gewichtseinsparung möglich ist.
2. Ein solchermaßen hergestelltes Balgmaterial ist wesentlich preiswerter als das aus dem Stand der Technik bekannte Balgmaterial mit mehreren Gewebelagen.
3. Auf Grund des geringen Gewichts neigt ein solchermaßen hergestellter Balg nur in geringem Maße zum Durchhängen, so dass Maßnahmen zur Stützung des Balges weitestgehend entfallen können, insbesondere können die Einfassprofile zumindest teilweise entfallen.

Gegenstand der Erfindung ist ebenfalls ein Balg als Wellen- oder Faltenbalg mit mindestens einer Gewebelage der zuvor beschriebenen Art, wobei nicht jede Falte oder Welle mit einem Einfassprofil oder Einfassrahmen versehen sein muss.

Anhand der Zeichnungen wird die Erfindung nachstehend beispielhaft näher erläutert.
- Figur 1: zeigt ein Gewebe für eine Gewebelage als Tuchbindung;
- Figur 2: zeigt ein Gewebe für eine Gewebelage als Tuchbindung gemäß Figur 1, wobei das Gewebe geplättet ist;
- Fig. 3: zeigt schematisch den Balg zwischen zwei Fahrzeugteilen;
- Fig. 4: zeigt schematisch den Faltenbalg zwischen den Fahrzeugteilen gemäß Fig. 3 in vergrößerter Darstellung;
- Fig. 5: zeigt einen Schnitt gemäß der Linie V-V der Einzelheit "X" aus Fig. 4 in vergrößerter Darstellung.

Das Gewebe besteht aus Schussfäden 1 und Kettfäden 2. Eine solche Gewebeart ist hinreichend bekannt und braucht an dieser Stelle nicht näher erläutert zu werden.

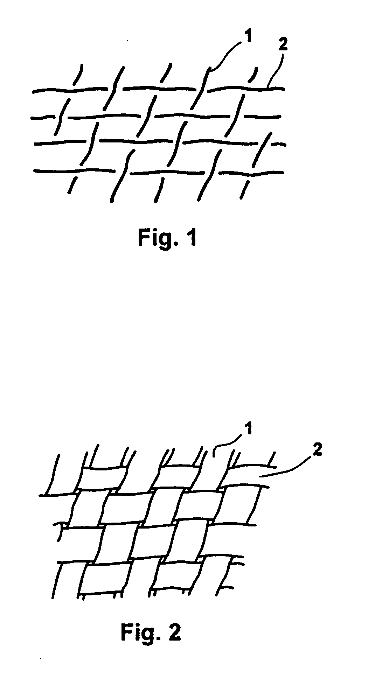

Zwischen den aufeinanderfolgenden Schussfäden und auch den Kettfäden besteht immer ein gewisser Abstand, auch wenn die Schussfäden durch das Ried angeschlagen werden. Hier setzt nun die Erfindung ein. Wird nun gemäß Figur 2 der Kett- und der Schussfaden durch Plätten des Gewebes verbreitert, so werden zwangsweise die zwischen Schuss- und Kettfäden vorhandenen Öffnungen minimiert bzw. sogar aufgehoben, wenn es zu einer unmittelbaren Verbindung unter den Fäden kommt. Durch die plastische Verformung des Gewebes wird nun, wie bereits an anderer Stelle ausgeführt, die Steifigkeit des Gewebes als solche erhöht. Der Grund hierfür liegt im Wesentlichen darin begründet, dass die Zwischenräume zwischen Kette und Schuss untereinander entfallen. Durch Beschichtung eines solchermaßen hergestellten Gewebes mit einer Kunststoffschicht von innen und auch von außen wird nicht nur das Gewebe als solches vor Umwelteinflüssen geschützt, sondern auch das Gewebe noch dauerhaft abgedichtet.

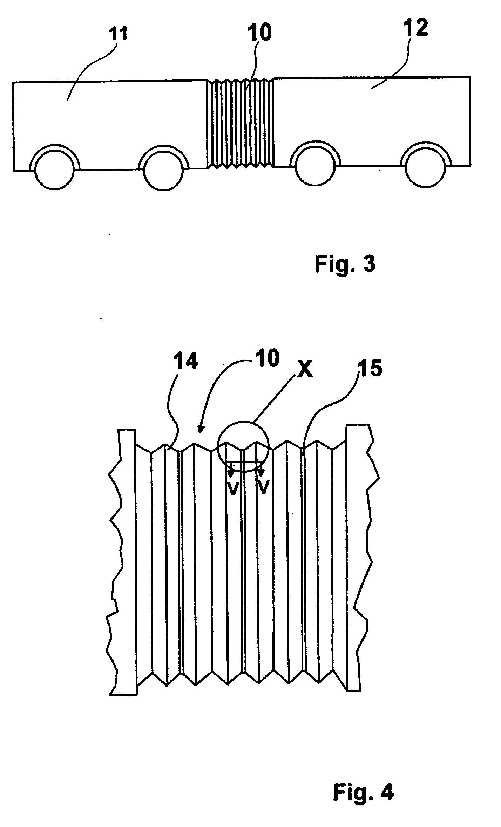

Figur 3 zeigt ein Gelenkfahrzeug, zum Beispiel einen Gelenkbus mit einem Balg 10 zwischen den beiden Fahrzeugteilen 11 und 12.

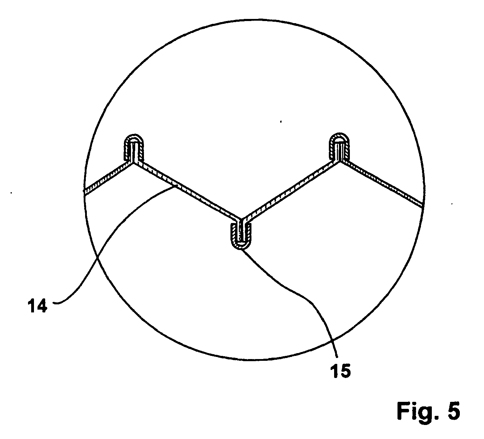

Figur 4 zeigt einen Ausschnitt eines tunnelförmigen Faltenbalges, wobei nur noch jede dritte Falte 14 einen umlaufenden Einfassrahmen 15 aufweist (Fig. 5).

## Patentansprüche

1. Gewebelage eines Balges, z. B. eines Übergangs zwischen zwei gelenkig miteinander verbundenen Fahrzeugen oder einer Fluggastbrücke,
**dadurch gekennzeichnet,**
**dass** die Gewebelage durch Krafteinwirkung auf die Gewebelage vor einer Kunststoffbeschichtung plastisch verformt ist.

2. Gewebelage eines Balges, z. B. eines Übergangs zwischen zwei gelenkig miteinander verbundenen Fahrzeugen oder einer Fluggastbrücke, wobei die Gewebelage durch Krafteinwirkung auf die Gewebelage derart plastisch verformt ist, dass die zwischen Kett- und Schussfäden vorhandenen Öffnungen weitgehend geschlossen sind.

3. Gewebelage nach Anspruch 1 oder 2,
**dadurch gekennzeichnet,**
**dass** die Kett- und/oder Schussfäden plastisch verformbar sind.

4. Gewebelage nach einem oder mehrerender voranstehenden Ansprüche,
**dadurch gekennzeichnet,**
**dass** die plastische Verformung durch Krafteinwirkung auf die Ober- und Unterseite der Gewebelage erfolgt.

5. Gewebelage nach einem oder mehrerender voranstehenden Ansprüche,
**dadurch gekennzeichnet,**
**dass** die Kett- und Schussfäden monofil ausgebildet sind.

6. Gewebelage nach einem oder mehreren der voranstehenden Ansprüche,
**dadurch gekennzeichnet,**
**dass** die Gewebelage einer Wärmebehandlung unterzogen wird.

7. Gewebelage nach einem oder mehreren der voranstehenden Ansprüche,
**dadurch gekennzeichnet,**
**dass** die Gewebelage zumindest auf einer Seite mit einer Kunststoffschicht versehen ist.

8. Balg, insbesondere eines Übergangs zwischen zwei gelenkig miteinander verbundenen Fahrzeugen
**gekennzeichnet durch** mindestens eine Gewebelage gemäß einem oder mehrerer der Ansprüche 1 bis 7.

9. Balg nach Anspruch 8,
**dadurch gekennzeichnet,**
**dass** der Balg als Falten- oder Wellenbalg ausgebildet ist.

## Claims

1. A fabric layer of a bellows, e.g., of a connection between two hinge-linked vehicles or of an aircraft passenger bridge,
**characterized in**
**that** the fabric layer is plastically deformed by a force acting on the fabric layer prior to proceeding with the plastic coating application.

2. A fabric layer of a bellows, e.g., of a connection between two hinge-linked vehicles or of an aircraft passenger bridge, said fabric layer being plastically deformed by a force acting on the fabric layer in such a manner that the openings existing between the warp and weft threads are closed to a large extent.

3. The fabric layer as set forth in claim 1 or 2,
**characterized in**
**that** the warp and/or weft threads are plastically deformable.

4. The fabric layer as set forth in one or more of the afore mentioned claims,
**characterized in**
**that** the plastic deformation is performed by a force acting on the top and the bottom side of the fabric.

5. The fabric layer as set forth in one or more of the afore mentioned claims,
**characterized in**
**that** the warp and weft threads are configured to be monofil.

6. The fabric layer as set forth in one or more of the afore mentioned claims,
**characterized in**
**that** the fabric is subjected to thermal treatment.

7. The fabric layer as set forth in one or more of the afore mentioned claims,
**characterized in**
**that** the fabric layer is provided with a plastic layer, at least on one side thereof.

8. A bellows, more specifically of a connection between two hinge-linked vehicles,
**characterized by** at least one fabric layer according to one or more of the claims 1 through 7.

9. The bellows as set forth in claim 8,
**characterized in**
the bellows is configured to be a pleated or a corrugated bellows.

## Revendications

1. Couche de tissu d'un soufflet, p. ex. d'une intercirculation entre deux véhicules articulés ou d'une passerelle d'embarquement,
**caractérisée en ce**
**que** la couche de tissu est plastiquement déformée sous l'action d'une force exercée sur la couche de tissu avant l'application du revêtement en matière plastique.

2. Couche de tissu d'un soufflet, p. ex. d'une intercirculation entre deux véhicules articulés ou d'une passerelle d'embarquement, la couche de tissu étant plastiquement déformée sous l'action d'une force exercée sur la couche de tissu de telle sorte que les espaces existant entre les fils de chaîne et les fils de trame sont fermés dans une large mesure.

3. Couche de tissu selon la revendication 1 ou 2,
**caractérisée en ce**
**que** les fils de chaîne et/ou de trame sont plastiquement déformables.

4. Couche de tissu selon une ou plusieurs des revendications précédentes,
**caractérisée en ce**
**que** la déformation plastique se fait en exerçant une force sur la face supérieure et inférieure de la couche de tissu.

5. Couche de tissu selon une ou plusieurs des revendications précédentes,
**caractérisée en ce**
**que** les fils de chaîne et les fils de trame sont monobrin.

6. Couche de tissu selon une ou plusieurs des revendications précédentes,
**caractérisée en ce**
**que** la couche de tissu est soumise à un traitement thermique.

7. Couche de tissu selon une ou plusieurs des revendications précédentes,
**caractérisée en ce**
**que** la couche de tissu est munie d'un revêtement en matière plastique sur un côté au moins.

8. Soufflet, notamment d'une intercirculation entre deux véhicules articulés,
**caractérisé par** au moins une couche de tissu selon une ou plusieurs des revendications 1 à 7.

9. Soufflet selon la revendication 8,
**caractérisée en ce**
**que** le soufflet est réalisé sous forme de soufflet ondulé ou à plis.
